# EUROPÄISCHE PATENTANMELDUNG

(11) **EP 3 798 702 A1**
(43) Veröffentlichungstag der Anmeldung: **31.03.2021**
(21) Anmeldenummer: 19200611.2
(22) Anmeldetag: 30.09.2019
(51) Int. Cl.: G02B 6/44

(54) **ANSCHLUSSDOSE FÜR LICHTWELLENLEITER**

(71) Anmelder: Optonet AG, 9524 Zuzwil SG (CH)
(72) Erfinder: STUDER, Kurt, 6318 Walchwil (CH)
(74) Vertreter: Keller Schneider Patent- und Markenanwälte AG (Bern)

(57) **Zusammenfassung**

Eine Anschlussdose (100) für Lichtwellenleiter, insbesondere in Form einer Unterputzdose, enthält:
a) ein Kabelreservoir (200) zum Ablegen von unterschiedlichen Überlängen eines Lichtwellenleiteranschlusskabels (600),
b) eine Spleisskassette (300) umfassend eine Spleissaufnahme (800) für einen oder mehrere Spleisse (810) sowie umfassend eine Faseraufnahme (320a, 320b, 320c, 320d) zur Aufnahme von unterschiedlichen Überlängen an einzelnen optischen Fasern und/oder zur Aufnahme von unterschiedlichen Längen von nicht benutzten optischen Fasern, z.B. von einem nicht benutzen Reserve-Pigtail ,
c) Eine Halterung (400a, 400b) für die Aufnahme einer Anschlussvorrichtung (500a, 500b) zum Anschliessen eines optischen Leiters (30) an die Anschlussdose (100),
wobei Kabelreservoir (200) und Spleisskassette (300) in räumlich voneinander getrennten Bereichen vorliegen und wobei das Kabelreservoir (200) gegenüber der Spleisskassette (300) beweglich gelagert ist, so dass die Spleisskassette (300) mit dem Kabelreservoir (200) verschliessbar ist.

## Beschreibung

### Technisches Gebiet

Die Erfindung betrifft eine Anschlussdose für Lichtwellenleiter, insbesondere in Form einer Unterputzdose, enthaltend ein Kabelreservoir zum Ablegen von unterschiedlichen Überlängen eines Lichtwellenleiteranschlusskabels, eine Spleisskassette umfassend eine Spleissaufnahme für einen oder mehrere Spleisse sowie umfassend eine Faseraufnahme zur Aufnahme von unterschiedlichen Überlängen an einzelnen optischen Fasern und/oder zur Aufnahme von unterschiedlichen Längen von nicht benutzten optischen Fasern, und eine Halterung für die Aufnahme einer Anschlussvorrichtung zum Anschliessen eines optischen Leiters an die Anschlussdose. Des Weiteren betrifft die Erfindung ein Gebäudeelement, insbesondere eine Wand, einen Boden oder eine Decke, mit einer daran befestigten Anschlussdose. Ebenfalls Gegenstand der Erfindung ist eine Anordnung umfassend einen Installationskanal, einen Verteilerkasten und/oder einen Medienkasten mit einer Anschlussdose.

### Stand der Technik

In der Nachrichtentechnik werden Lichtwellenleiter als Übertragungsmedien in Bereichen eingesetzt, bei denen hohe Reichweiten und Übertragungsraten erforderlich sind. Werden die Lichtwellenleiter in Kabeln bis zu den Endkunden verlegt ("Fibre To The Home"/FTTH bei Privathaushalten; "Fiber to the Building"/FTTB bei Unternehmen), ist es notwendig in den jeweiligen Gebäuden entsprechende Anschlussdosen zur Verfügung zu stellen, mit welchen der Endkunde seine optischen Netzwerkkomponenten an die ins Gebäude geführten Lichtwellenleiteranschlusskabel anschliessen kann.

Da Verlegen und Anschliessen von Lichtwellenleiterkabeln an Anschlussdosen ist im Vergleich zur Kupfertechnologie jedoch weitaus anspruchsvoller. Lichtwellenleiter sind empfindlich auf mechanische Beanspruchung und es ist stets ein Mindestbiegeradius einzuhalten, da bei einer Unterschreitung eine Beeinträchtigung der Lichtleitfähigkeit oder ein Bruch des Lichtwellenleiters droht.

Überlängen des Lichtwellenleiteranschlusskabels können somit nicht einfach in Installationsrohre zurückgestossen oder in undefinierter Weise in der Anschlussdose aufgenommen werden.

Des Weiteren werden die in das Gebäude geführten Lichtwellenleiterkabel üblicherweise nicht direkt an Lichtwellenleiterstecker oder -buchsen angeschlossen, sondern durch spleissen an sogenannte "Pigtails". Ein Pigtail ist ein kurzes Stück einer optischen Faser, welche einseitig mit einem Lichtwellenleiterstecker oder einer Lichtwellenleiterbuchse vorkonfektioniert ist. Entsprechend müssen auch die Spleisse als auch unterschiedliche Überlängen der optischen Fasern der Pigtails in der Anschlussdose sicher untergebracht werden können.

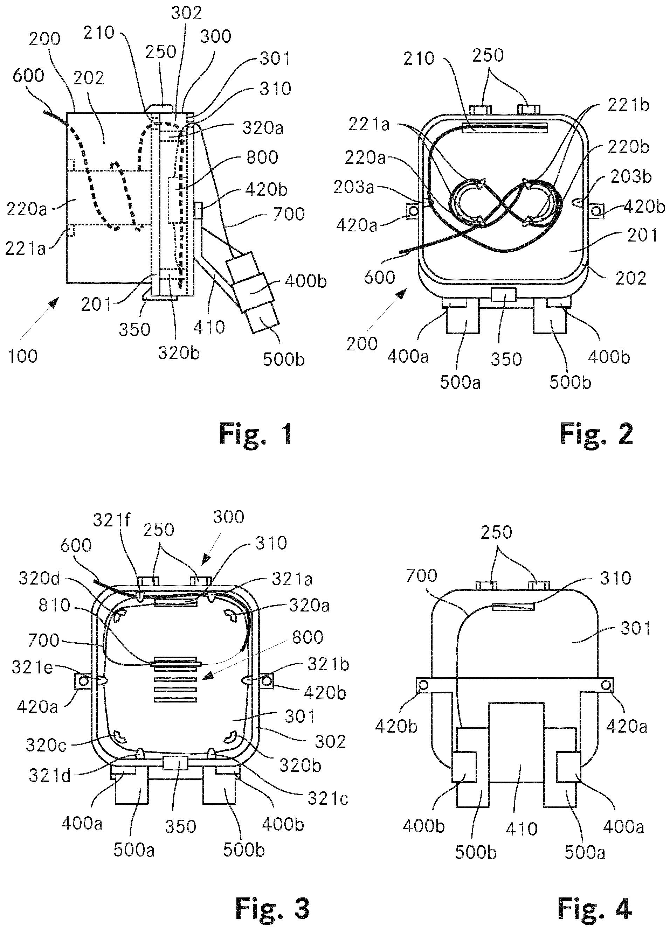

Die EP 3 115 818 A1 (Huawai Technologies Co., Ltd) beschreibt in diesem Zusammenhang beispielsweise faseroptische Anschlussboxen. In den Fig. 1 und 2 ist eine Anschlussbox dargestellt, welche eine an einem Basisteil schwenkbar gelagerte Spleisskassette mit einer Aufwickelvorrichtung umfasst, während das Basisteil einen Kabelführungsbereich für ein in die Anschlussbox eingeführtes Anschlusskabel aufweist. Das Anschlusskabel wird im Basisteil im Kabeiführungsbereich geführt und gelangt im Bereich des Schwenkmechanismus in den Aufwickelbereich in der Spleisskassette, wo es aufgewickelt und mit einem Pigtail im Spleissbereich gespleisst wird. Das Pigtail wird in der gleichen Aufwickelvorrichtung aufgewickelt, auf welcher bereits das Anschlusskabel aufgewickelt ist. Der nicht aufgewickelte Abschnitt des Pigtails wird sodann parallel zum Anschlusskabel zurück in das Basisteil geführt und, wo es mit einem Stecker verbunden ist. Bei der in den Fig. 4 - 9 der EP 3 115 818 A1 dargestellten Anschlussbox sind die Spleissablage mit Aufwickelbereich für das Anschlusskabel und die Pigtails mit einer die Stecker tragenden und schwenkbaren Platte abgedeckt.

Die WO 2011/112329 A1 (3M Innovativer Properties Company) zeigt ein Anschlussgehäuse für optische Fasern umfassend ein Gehäuse mit einer Basis und einem Deckel sowie einen entnehmbaren Faserhalter. Der Faserhalter umfasst einen Spleissteil, eine Halterung für einen Faserstecker sowie Bereiche zur Aufnahme eines ummantelten Kabels wie auch von entmantelten Bereichen des Kabels bzw. Fasern.

Nachteilig bei solche Anschlussvorrichtungen ist jedoch, dass die Montage aufwändig ist und die Gefahr besteht, mit dem sperrigen Anschlusskabel die feinen optischen Fasern des Pigtails bei der Montage zu beschädigen. Dies insbesondere, wenn die Anschlussdosen zur Wandmontage, insbesondere zur Unterputzmontage, und/oder zur Montage an oder in einem Installationskanal, einem Verteilerkasten und/oder einem Medienkasten vorgesehen sind.

Es besteht daher nach wie vor Bedarf nach verbesserten Anschlussvorrichtungen, welche insbesondere für die Wand- und Unterputzmontage ausgelegt sind.

### Darstellung der Erfindung

Aufgabe der Erfindung ist es, die vorstehend genannten Nachteile zu überwinden. Insbesondere soll eine Anschlussdose für Lichtwellenleiter bereitgestellt werden, welche eine möglichst einfache und sichere Montage ermöglicht. Die Anschlussdose soll dabei bevorzugt zur Wandmontage, besonders bevorzugt zur Unterputz-Wandmontage, und/oder zur Montage an oder in einem Installationskanal, einem Verteilerkasten und/oder einem Medienkasten geeignet sein. Im Speziellen sollen in der Anschlussdose unterschiedliche Überlängen von einzelnen optischen Fasern als auch von Lichtwellenleiteranschlusskabel sowie Spleisse sicher aufgenommen werden können.

Die Lösung der Aufgabe ist durch die Merkmale des Anspruchs 1 definiert. Demnach betrifft die Erfindung in einem ersten Aspekt eine Anschlussdose für Lichtwellenleiter, insbesondere in Form einer Unterputzdose, enthaltend:
a) ein Kabelreservoir zum Ablegen von unterschiedlichen Überlängen eines Lichtwellenleiteranschlusskabels,
b) eine Spleisskassette umfassend eine Spleissaufnahme für einen oder mehrere Spleisse sowie umfassend eine Faseraufnahme zur Aufnahme von unterschiedlichen Überlängen an einzelnen optischen Fasern und/oder zur Aufnahme von unterschiedlichen Längen von nicht benutzten optischen Fasern, z.B. von einem nicht benutzten Reserve-Pigtail,
c) Eine Halterung zur Aufnahme einer Anschlussvorrichtung zum Anschliessen eines optischen Leiters an die Anschlussdose,
wobei Kabelreservoir und Spleisskassette in räumlich voneinander getrennten Bereichen vorliegen und wobei das Kabelreservoir gegenüber der Spleisskassette beweglich gelagert ist, so dass die Spleisskassette mit dem Kabelreservoir verschliessbar ist.

Der Begriff "Anschlussdose für Lichtwellenleiter" steht insbesondere für eine Einheit, insbesondere eine Steckdose, an welcher sich ein anzuschliessender optischer Leiter unter Ausbildung einer lichtleitenden Verbindung an ein in der Anschlussdose endendes Lichtwellenleiteranschlusskabel anschliessen lässt. Bevorzugt lässt sich der anzuschliessende optische Leiter zerstörungsfrei und/oder werkzeuglos mit der Anschlussdose verbinden und wieder von ihr trennen, z.B. durch eine Steckverbindung. Die Anschlussdose für Lichtwellenleiter beinhaltet insbesondere einen optischen Steckverbinder, beispielsweise eine Buchse und/oder einen Stecker, über welchen sich ein mit einem komplementären Steckverbinder bestückter optischer Leiter unter Ausbildung einer lichtleitenden Verbindung anschliessen lässt. Bevorzugt ist die Anschlussdose für Lichtwellenleiter zur Montage an oder in einem Gebäudeelement, insbesondere einer Wand, einem Boden oder einer Decke, ausgelegt. Gemäss einer speziellen Ausführungsform ist die Anschlussdose zur Montage an oder in einem Installationskanal, Verteilerkasten und/oder Medienkasten ausgelegt. Der Installationskanal, Verteilerkasten und/oder Medienkasten ist dabei im Besonderen an einem Gebäudeelement befestigt und/oder wenigstens teilweise darin eingelassen.

Als "Medienkasten" wird dabei ein für die Verteilung und/oder für den Anschluss von nachrichtentechnischen Übertragungsmedien, insbesondere von Telekommunikationsmedien, ausgelegter Verteiler- und/oder Anschlusskasten verstanden.

Der Begriff "optische Faser" steht vorliegend für einen einzelnen Lichtwellenleiter. Dieser verfügt typischerweise über einen lichtführenden Kern und einen umgebenden Mantel mit einem niedrigeren Bergungsindex sowie optional eine den Mantel umgebende Schutzschicht, welche beispielsweise aus Kunststoff besteht. Der Kern und der Mantel der optischen Faser können beispielsweise aus Glas und/oder Kunststoff bestehen.

Unter einem "Lichtwellenleiterkabel" wird vorliegend eine Anordnung verstanden, bei welcher eine optische Faser, insbesondere wie sie vorstehend beschrieben ist, von einer Schutzhülle umgeben ist. Die Schutzhülle dient insbesondere dazu, die optische Faser vor mechanischen Einflüssen zu schützen und/oder diese zu stabilisieren. Bevorzugt besteht die Schutzhülle aus einem Kunststoffmaterial, insbesondere so, dass das Lichtwellenleiterkabel biegbar ist.

In einem Lichtwellenleiterkabel können auch mehrere optische Fasern in einer gemeinsamen Schutzhülle vorliegen.

Eine "Anschlussvorrichtung zum Anschliessen eines optischen Leiters" ist eine Vorrichtung an welcher ein optischer Leiter, gegebenenfalls mit einem passenden Gegenstück, unter Ausbildung einer lichtleitenden Verbindung angeschlossen werden kann. Besonders bevorzugt ist die Anschlussvorrichtung ein Steckverbinder, beispielsweise ein Stecker und/oder eine Buchse. Ein Halter hierfür ist entsprechend eine Vorrichtung, welche zur Aufnahme einer solchen Anschlussvorrichtung ausgelegt ist.

Der Ausdruck "Ablegen", z.B. von unterschiedlichen Überlängen eines Lichtwellenleiteranschlusskabels, steht vorliegend insbesondere für ein Aufwickeln, beispielsweise von unterschiedlichen Überlängen eines Lichtwellenleiteranschlusskabels.

Durch die räumliche Trennung des Kabelreservoirs zum Ablegen von unterschiedlichen Überlängen eines Lichtwellenleiteranschlusskabels und der Faseraufnahme zur Aufnahme von unterschiedlichen Überlängen an einzelnen optischen Fasern kommt das sperrige Lichtwellenleiterkabel bei der Montage wenn überhaupt nur punktuell mit den empfindlichen optischen Fasern in Kontakt. Damit wird verhindert, dass z.B. beim Aufwickeln von Überlängen des Lichtwellenleiteranschlusskabels die optischen Fasern beschädigt werden. Zudem können die Überlängen der optischen Fasern und des Lichtwellenleiters getrennt voneinander in die jeweiligen Aufnahmen eingelegt werden, was die Montage wesentlich vereinfacht.

Beispielsweise können in einem ersten Schritt die vorhanden Überlängen der optischen Fasern von Pigtails in der Faseraufnahme eingelegt und eine Spleissverbindung mit freigelegten Fasern des Lichtwellenleiterkabels an dessen freien Ende hergestellt werden. Zusätzlich können in diesem ersten Schritt auch die freien Fasern von allenfalls vorhandenen und nicht benötigten Reserve-Pigtails in der Faseraufnahme aufgenommen werden.

Nach dem Einlegen der Spleisse in die Spleissaufnahme kann die Spleisskassette mit dem beweglich gelagerten Kabelreservoir verschlossen werden. Damit sind die optischen Fasern als auch die Spleisse vor mechanischen Einwirkungen bestmöglich geschützt. Bei einer anschliessenden Aufnahme von Überlängen des Lichtwellenleiteranschlusskabels im Kabelreservoir besteht dann kaum mehr ein Risiko, dass die optischen Fasern oder die Spleisse durch das Lichtwellenleiterkabel beschädigt werden.

Des Weiteren ermöglicht die erfindungsgemässe Konstruktion eine besonders kompakte Bauweise, was speziell für Unterputzdosen von grossem Vorteil ist.

Gemäss einer besonders bevorzugten Ausführungsform ist die Anschlussdose derart ausgestaltet, dass bei geschlossener Spleisskassette das Kabelreservoir von einer der Spleisskassette abgewandten Seite zugänglich ist, so dass bei geschlossener Spleisskassette Überlängen des Lichtwellenleiteranschlusskabels im Kabelreservoir aufgenommen werden können.

Dadurch lassen sich Überlängen des Lichtwellenleiteranschlusskabels besonders einfach und, ohne dieses an der Spleisskassette vor- und/oder durch diese hindurchzuführen, im Kabelreservoiraufnehmen.

Besonders bevorzugt ist die Spleisskassette form- und/oder kraftschlüssig mit dem Kabelreservoirverschliessbar, insbesondere mit einer form- und/oder kraftschlüssigen Verbindungsvorrichtung, bevorzugt mit einer Rastverbindung, z.B. einem Rasthaken. Damit lässt sich die Spleisskassette zuverlässig und in definierter Weise verschliessen.

Weiter ist es bevorzugt, wenn die Spleisskassette lösbar mit dem Kabelreservoir verschliessbar ist. Hierfür kann z.B. die form- und/oder kraftschlüssige Verbindungsvorrichtung so ausgestaltet sein, dass sie sich wieder öffnen lässt. Eine lösbar verschliessbare Spleisskassette hat den Vorteil, dass sie beispielsweise für Wartungszwecke wieder geöffnet werden kann.

Es ist aber auch denkbar, die Spleisskassette stoffschlüssig und/oder unlösbar mit dem Kabelreservoir zu verschliessen. In diesem Fall ist gewährleistet, dass nach der Montage keine Manipulationen an den Spleissen vorgenommen werden können.

Besonders bevorzugt ist das Kabelreservoir derart ausgestaltet, dass ein Lichtwellenleiteranschlusskabel, wenn es im Kabelreservoir vorliegt, in einer Wickelebene im Wesentlichen allseitig, und insbesondere vollständig, von einem Randbereich des Kabelreservoirs umgeben ist. Damit wird das Lichtwellenleiterkabel in der Wickelebene vor äusseren mechanischen Einwirkungen geschützt. In der Wickelebene ist das Lichtwellenleiteranschlusskabel aufgrund der Biegebelastung besonders empfindlich. Entsprechend bietet der Randbereich einen vorteilhaften Schutz, insbesondere wenn es sich um ein empfindliches Lichtwellenleiteranschlusskabel handelt.

Es ist aber grundsätzlich auch möglich, auf einen derartigen Randbereich zu verzichten, z.B. wenn sehr robuste Lichtwellenleiterkabel verwendet werden.

Das Kabelreservoir ist in einer vorteilhaften Ausführungsform als zylindrischer Hohlkörper ausgestaltet, welcher insbesondere einseitig durch eine Bodenfläche verschlossen ist. Die Mantelfläche des zylindrischen Hohlkörpers bildet dabei einen wie vorstehend beschriebenen Randbereich. In diesem Fall ist das Kabelreservoir bevorzugt becherförmig ausgebildet.

Eine Wickelebene des Kabelreservoirs steht insbesondere senkrecht zu einer Längsachse des zylindrischen Hohlkörpers und/oder die Wickelebene ist bevorzugt parallel zur Bodenfläche des zylindrischen Hohlkörpers ausgebildet.

Bei einer solchen Ausführungsform kann das Lichtwellenleiteranschlusskabel auf der Bodenfläche aufliegend aufwickelt werden. Dies führt zusammen mit dem als Randbereich wirkenden Mantelbereich des zylindrischen Hohlkörpers zu einem optimalen Schutz des Lichtwellenleiteranschlusskabels, ohne dass das Aufwickeln des Lichtwellenleiterkabels nennenswert erschwert würde.

Weiter ist es bevorzugt, wenn das Kabelreservoir derart ausgestaltet ist, dass das Lichtwellenleiteranschlusskabel mit einem achtförmigen Verlauf und/oder in Form einer liegenden Acht "8" aufgewickelt werden kann, wobei insbesondere das Lichtwellenleiteranschlusskabel in Form von mehreren im Wesentlichen parallel übereinander liegenden achtförmigen Schleifen aufgewickelt werden kann. Damit kann ein allfälliger Drall, welcher sich beim Aufwickeln des Lichtwellenleiteranschlusskabels meist ergibt, neutralisiert werden. Zudem wird eine definierte Schichtung des Kabels erreicht, wodurch verhindert wird, dass sich die einzelnen Kabelschlaufen bei der Montage unkontrolliert ineinander verwickeln und eine spätere Abwicklung erschweren.

Prinzipiell kann das Kabelreservoir aber auch derart ausgestaltet sein, dass das Lichtwellenleiteranschlusskabel mit einem kreisförmigen und/oder elliptischen Verlauf aufgewickelt werden kann. Dies kann z.B. für kurze Überlängen ausreichen, da in diesem Fall die Drallbildung und die unkontrollierte Verwicklung des Kabels weniger problematisch sind.

Bevorzugt liegen im Kabelreservoir zwei beabstandete Wickelkörper vor, welche eine Aufwicklung des Lichtwellenleiteranschlusskabels mit einem achtförmigen Verlauf ermöglichen. Insbesondere sind die Wickelkörper so angeordnet, dass zwischen den beiden Wickelkörpern ein Freiraum vorliegt, in welchem sich das Lichtwellenleiteranschlusskabel von einem Wickelkörper zum anderen führen lässt und/oder in welchem sich Abschnitte des Lichtwellenleiteranschlusskabel kreuzen können, wenn das Lichtwellenleiteranschlusskabel mit einem achtförmigen Verlauf auf die Wickelkörper aufgewickelt ist.

Damit kann in einfacher Art und Weise eine Aufwicklung des Lichtwellenleiteranschlusskabels mit einem achtförmigen Verlauf erreicht werden. Prinzipiell kann aber auch nur ein einzelner Wickelkörper vorgesehen werden, wenn z.B. eine Aufwicklung mit einem achtförmigen Verlauf nicht als notwendig erachtet wird.

Mit Vorteil ist jeder der Wickelkörper als ein von einer Bodenfläche des Kabelreservoirs abstehendes Element mit einer konvex gekrümmten äusseren Oberfläche ausgestaltet. Die konvex gekrümmten Oberflächen stehen dabei bevorzugt senkrecht zur Bodenfläche. Bevorzugt sind die beiden Wickelkörper derart angeordnet, dass die konvex gekrümmten Oberflächen in entgegengesetzte Richtungen zeigen. Damit lässt sich das Lichtwellenleiteranschlusskabel mit einem definierten Biegeradius um die konvexen Oberflächen wickeln.

Insbesondere ist jeder der Wickelkörper als ein von einer Bodenfläche des Kabelreservoirs abstehendes Segment eines hohlzylindrischen Profils und/oder als U-förmiges Profil ausgestaltet. Das Segment des hohlzylindrischen Profils und/oder das U-förmige Profil stehen dabei insbesondere senkrecht von der Bodenfläche ab. Dadurch können die Wickelkörper mit geringem Materialaufwand hergestellt werden.

Grundsätzlich können jedoch auch anders ausgestaltete Wickelkörper vorgesehen werden. Beispielsweise können massive Wickelkörper, z.B. Vollzylinder, eingesetzt werden.

Am oberen und der Grundfläche entgegengesetzten Ende des Randbereichs und/oder an den oberen und der Grundfläche entgegengesetzten Enden der Wickelkörper können zudem Sicherungsvorsprünge angeordnet sein, welche in den inneren Bereich des Kabelreservoirs hineinragen und/oder von den Wickelkörpern abstehen. Die Sicherungsvorsprünge sind insbesondere so dimensioniert, dass diese im Kabelreservoir vorliegende Lichtwellenleiterkabel zumindest teilweise überragen. Damit wird verhindert, dass die Lichtwellenleiterkabel nach oben oder weg von der Grundfläche aus dem Kabelreservoirherausrutschen können. Derartige Vorsprünge sind aber nicht zwingend.

Weiter ist es bevorzugt, wenn das Kabelreservoirgegenüber der Spleisskassette dreh- und/oder verkippbar gelagert ist, bevorzugt durch ein Scharnier. Dadurch wird der Öffen- und/oder Schliessvorgang der Spleisskassette vereinfacht.

Das Kabelreservoir kann aber auch so ausgebildet sein, dass es gegenüber der Spleisskassette in einem Führungselement verschiebbar gelagert ist.

Ebenfalls möglich ist ein vollständig von der Spleisskassette abtrennbares Kabelreservoir.

Ist das Kabelreservoir gegenüber der Spleisskassette dreh- und/oder verkippbar gelagert, liegt in einer weiter bevorzugten Ausführungsform im Bereich einer Drehachse des Kabelreservoirs und/oder seitlich im Kabelreservoir ein schlitzförmiger Durchlass vor, insbesondere in der Bodenfläche, durch welchen sich ein Lichtwellenleiteranschlusskabel aus dem Kabelreservoir in die Spleisskassette führen lässt, wenn die Spleisskassette mit dem Kabelreservoir verschlossen ist.

Durch die räumliche Nähe des schlitzförmigen Durchlasses und der Drehachse wird die Bewegung des Lichtwellenleiterkabels, welches aus dem Kabelreservoir in die Spleisskassette geführt wird, beim Schliessen der Spleisskassette auf ein Minimum beschränkt. Dies reduziert mechanische Beschädigungen der empfindlichen optischen Fasern.

Der schlitzförmige Durchlass ist im Kabelreservoir bevorzugt derart angeordnet, dass er über der Faseraufnahme für die optischen Fasern in der Spleisskassette liegt, wenn die Spleisskassette mit dem Kabelreservoir verschlossen ist. Eine Längsrichtung des schlitzförmigen Durchlasses verläuft zudem im Besonderen tangential zu einem Abschnitt der Faseraufnahme und/oder zu den optischen Fasern in der Spleisskassette, wenn die optischen Fasern in der Faseraufnahme der Spleisskassette vorliegen.

Dadurch kann das Lichtwellenleiterkabel direkt in der Wickelrichtung den Aufnahmebereich der Spleisskassette geführt werden, was die Handhabung bei der Montage vereinfacht und die mechanischen Belastungen auf das Lichtwellenleiterkabel reduziert.

Es ist aber grundsätzlich auch möglich, eine anders ausgestaltete und/oder anders angeordnete Durchführung vom Kabelreservoir in die Spleisskassette vorzusehen.

Die Faseraufnahme ist bevorzugt derart ausgestaltet, dass die optischen Fasern in der Spleisskassette im Wesentlichen in Form eines Kreises und/oder einer Ellipse aufgenommen werden können. Damit bleibt im zentralen Bereich der Faseraufnahme Platz für weitere Komponenten, wie z.B. die Spleissaufnahme und zugleich können die minimalen Biegeradien der Fasern eingehalten werden.

Die Spleissablage in der Spleisskassette ist insbesondere in einem zentralen Bereich der Faseraufnahme angeordnet, insbesondere so, dass die optischen Fasern die Spleissaufnahme in einer Ebene umgeben, wenn die optischen Fasern in der Faseraufnahme vorliegen. Damit wird eine optimale Platzausnutzung erreicht, wodurch die Anschlussdose als Ganzes kompakter ausgestaltet werden kann.

Es sind aber grundsätzlich auch andere Anordnungen der Fasern und/oder der Spleisse in der Spleisskassette möglich. So können die Spleisse z.B. auch in einem separaten Bereich neben den optischen Fasern untergebracht werden.

Die Spleisskassette weist im Besonderen eine Grundplatte mit einem abstehenden Randbereich, welcher die Grundplatte im Wesentlichen vollständig umläuft, auf. Dadurch können Überlängen der optischen Fasern auf der Grundplatte aufliegend aufgewickelt werden, wobei der abstehende Randbereich den Verlauf der Fasern vorgibt und diese gegen mechanische Einwirkungen schützt.

Der Randbereich ist dabei bevorzugt derart ausgestaltet, dass in der Faseraufnahme vorliegende optische Fasern in der Wickelebene vollständig vom Randbereich umgeben sind.

Die Faseraufnahme der Spleisskassette wird insbesondere durch ein oder mehrere Führungselemente, z.B. Vorsprünge, auf der Grundplatte gebildet, welche eine Positionierung und/oder Führung der optischen Fasern auf der Grundplatte ermöglichen. Die Führungselemente sind insbesondere vom Randbereich beabstandet, so dass zwischen dem Randbereich und den Führungselementen ein kanalförmiger Bereich zum Aufwickeln von Überlängen der optischen Fasern gebildet wird.

Am oberen und der Grundplatte entgegengesetzten Ende des Randbereichs und/oder an den oberen und der Grundplatte entgegengesetzten Enden der Führungselemente können zudem Sicherungsvorsprünge angeordnet sein, welche in den inneren Bereich der Faseraufnahme hineinragen. Die Sicherungsvorsprünge sind insbesondere so dimensioniert, dass diese die in der Faseraufnahme vorliegenden optischen Fasern überragen. Damit wird verhindert, dass die optischen Fasern nach oben oder weg von der Grundplatte aus der Faseraufnahme herausrutschen können. Derartige Vorsprünge sind aber nicht zwingend.

Bevorzugt ist die Faseraufnahme derart ausgestaltet, dass eine Wickelebene der optischen Fasern parallel zur Grundplatte liegt.

Besonders bevorzugt sind das Kabelreservoir und die Spleisskassette derart ausgestaltet, dass in montiertem Zustand eine Wickelebene des Lichtwellenleiteranschlusskabels im Kabelreservoir im Wesentlichen planparallel zu einer Wickelebene der optischen Fasern in der Faseraufnahme der Spleisskassette liegt. Damit kann in Einbaurichtung der Anschlussdose eine besonders geringe Bauhöhe realisiert werden.

Im Besonderen liegt in der Grundplatte der Spleisskassette, bevorzugt im Bereich des abstehenden Randbereichs, eine Faserdurchlassöffnung, insbesondere eine schlitzförmige Öffnung, vor, durch welche sich optische Fasern aus der Spleisskassette herausführen lassen, wenn die Spleisskassette mit dem Kabelreservoir verschlossen ist. Die Faserdurchlassöffnung ist insbesondere auf einer dem Kabelreservoir entgegen gesetzte Seite der Spleisskassette angeordnet.

Dadurch sind die aus der Spleisskassette herausgeführten Fasern aus einer Richtung parallel zur Grundplatte bestmöglich vor mechanischen Einwirkungen geschützt.

Durch die Faserdurchlassöffnung können die optischen Fasern aus der Spleisskassette hin zur Halterung für die Aufnahme einer Anschlussvorrichtung zum Anschliessen eines optischen Leiters an die Anschlussdose geführt werden. Liegt in der Aufnahme eine Anschlussvorrichtung zum Anschliessen eines optischen Leiters, z.B. ein Steckverbinder vor, können die aus der Spleisskassette herausgeführten Fasern dort an die Anschlussvorrichtung, insbesondere einen Steckverbinder, angeschlossen werden.

Ebenso kann ein Steckverbinder, welcher Bestandteil eines vorkonfektionierten Pigtails ist, in die Halterung für die Aufnahme einer Anschlussvorrichtung zum Anschliessen eines optischen Leiters eingesetzt werden und die optische Faser des Pigtails kann durch die Faserdurchlassöffnung in die Spleisskassette geführt und dort mit den Fasern des Lichtwellenleiteranschlusskabels gespleisst werden.

Die Faserdurchlassöffnung kann aber auch an einem anderen Bereich der Spleisskassette angeordnet sein, z.B. im Randbereich selbst.

Die wenigstens eine Halterung für die Aufnahme einer Anschlussvorrichtung zum Anschliessen eines optischen Leiters an die Anschlussdose liegt bevorzugt auf einer der Faseraufnahme und/oder der Spleissaufnahme abgewandeten Seite der Spleisskassette vor.

Bevorzugt liegt die Spleisskassette räumlich zwischen dem Kabelreservoirund der Halterung zur Aufnahme einer Anschlussvorrichtung zum Anschliessen eines optischen Leiters an die Anschlussdose vor.

Dadurch wird eine klar strukturierte und hinsichtlich Montage der Anschlussdose besonders vorteilhafte räumliche Trennung zwischen dem Kabelreservoir, der Spleisskassette und dem Bereich der Anschlussvorrichtung zum Anschliessen eines optischen Leiters erzeugt. Des Weiteren können bei einer derartigen Anordnung die optischen Fasern zwischen der Halterung für die Aufnahme einer Anschlussvorrichtung, der Spleisskassette und des Kabelreservoirs minimal gehalten werden. Somit lassen sich z.B. Pigtails mit kurzen oder langen Anschlusstücken problemlos verwenden.

Prinzipiell sind aber auch andere Anordnungen möglich. Beispielsweise kann die Halterung auch am Randbereich der Spleisskassette vorliegen.

Die wenigstens eine Halterung für die Aufnahme einer Anschlussvorrichtung ist bevorzugt an der Spleisskassette angeordnet ist und/oder fest mit dieser verbunden. Dadurch ist der Abstand zwischen der Halterung und der Spleisskassette stets fix und es besteht keine Gefahr, dass die von der Anschlussvorrichtung zum Anschliessen eines optischen Leiters zur Spleisskassette verlaufenden optischen Fasern bei der Montage der Anschlussdose durch Relativbewegungen zwischen Spleisskassette und Halterung beschädigt werden.

Für spezielle Anwendungen sind aber auch andere Anordnungen denkbar.

Die wenigstens eine Halterung ist gemäss einer bevorzugten Ausführungsform bevorzugt derart ausgestaltet, dass eine in der Halterung eingesetzte Anschlussvorrichtung, insbesondere ein Steckverbinder, in einer Richtung schräg zu einer Wickelebene der Fasern in der Faseraufnahme und/oder einer Wickelebene des Lichtwellenleiterkabels im Kabelreservoir steht.

Insbesondere ist die wenigstens eine Halterung gemäss einer besonders bevorzugten Ausführungsform derart ausgestaltet, dass eine in der Halterung eingesetzte Anschlussvorrichtung, insbesondere ein Steckverbinder, in einer Richtung schräg zur Grundfläche des Kabelreservoirs und/oder schräg zur Grundplatte der Spleisskassette steht.

Der Ausdruck "schräg" steht vorliegend für einen Winkel ungleich 0°, 90°, 180°, 270° und 360°, bevorzugt für einen Winkel von 5 - 95°, besonders bevorzugt 10 - 45°.

Durch die schräge Anordnung kann eine Anschlussvorrichtung, insbesondere ein Steckverbinder, in platzsparender Weise angeordnet werden und zugleich zur besseren Zugänglichkeit von der Spleisskassette weg ragen.

Prinzipiell sind jedoch auch nicht-schräge Anordnungen möglich. Dies kann für spezielle Anwendungen vorteilhaft sein.

Weiter ist es bevorzugt, wenn eine Montagevorrichtung zum Anbringen der Anschlussdose an einem Gebäudeelement und/oder zum Anbringen an oder in einem Installationskanal, einem Verteilerkasten und/oder einem Medienkasten vorliegt. Ein Gebäudeelement ist insbesondere eine Wand, ein Boden oder eine Decke. Ein Installationskanal, ein Verteilerkasten und/oder ein Medienkasten ist bevorzugt an einem Gebäudeelement befestigt und/oder wenigstens teilweise, im Besonderen vollständig, darin eingelassen.

Die Montagevorrichtung kann z.B. eine Bohrung, eine Auflagefläche, eine Nut und/oder ein Montagerahmen sein. Damit lässt sich die Anschlussdose z.B. mit einer oder mehreren Schrauben am Gebäudeelement, einem Installationskanal, einem Verteilerkasten und/oder einem Medienkasten befestigen.

Es ist aber auch möglich, dass die Anschlussdose ohne spezielle Montagevorrichtung im Gebäudeelement, Installationskanal, Verteilerkasten und/oder Medienkasten festgeklemmt wird. Dies z.B. durch eine am Gebäudeelement, Installationskanal, Verteilerkasten und/oder Medienkasten vorliegende Klemmvorrichtung.

Die Montagevorrichtung ist insbesondere derart ausgelegt, dass bei einer vorgesehenen Befestigung der Anschlussdose an einem Gebäudeelement das Kabelreservoir näher am Gebäudeelement liegt oder weiter in das Gebäudeelement hineinragt als die Spieisskassette. Damit kann die das Lichtwellenleiteranschlusskabel aus dem Gebäudeelement direkt in das Kabelreservoir geführt und allfällige Überlängen können dort aufgenommen werden. Insgesamt vereinfacht dies die Montage der Anschlussdose wesentlich.

Die Montagevorrichtung ist bevorzugt derart ausgebildet, dass bei einer vorgesehenen Befestigung der Anschlussdose an einem Installationskanal, einem Verteilerkasten und/oder einem Medienkasten das Kabelreservoir näher am Installationskanal, dem Verteilerkasten und/oder dem Medienkasten liegt oder weiter in den Installationskanal, Verteilerkasten und/oder Medienkasten hineinragt als die Spleisskassette.

Besonders bevorzugt ist die Montagevorrichtung derart ausgebildet, dass bei einer vorgesehenen Befestigung der Anschlussdose an einem Installationskanal, einem Verteilerkasten und/oder einem Medienkasten das Kabelreservoir im Innern des Installationskanals, des Verteilerkastens und/oder des Medienkastens vorliegt, während die Halterung zur Aufnahme einer Anschlussvorrichtung oberhalb einer äusseren Oberfläche des Installationskanals, Verteilerkastens und/oder Medienkasten vorliegt.

Im Besonderen ist die Montagevorrichtung derart ausgelegt, dass bei einer vorgesehenen Befestigung der Anschlussdose im Inneren eines Installationskanals, Verteilerkastens und/oder Medienkastens die Spleisskassette näher an einer Zugangsöffnung des Installationskanals, Verteilerkastens und/oder Medienkastens liegt, als das Kabelreservoir.

Ganz besonders bevorzugt ist die Montagevorrichtung derart ausgelegt, dass bei einer vorgesehenen Befestigung der Anschlussdose an einem Gebäudeelement, einem Installationskanal, einem Verteilerkasten und/oder einem Medienkasten die Halterung zur Aufnahme einer Anschlussvorrichtung zum Anschliessen eines optischen Leiters an die Anschlussdose weiter vom Gebäudeelement, vom Installationskanal, vom Verteilerkasten und/oder vom Medienkasten entfernt ist, als die Spleisskassette und/oder das Kabelreservoir.

Bevorzugt ist die Montagevorrichtung derart ausgelegt, dass eine Wickelebene des Kabelreservoirs und/oder die Grundfläche des Kabelreservoirs im Wesentlichen parallel zu einer sichtbaren und/oder äusseren Oberfläche des Gebäudeelements, des Installationskanals, des Verteilerkastens und/oder des Medienkastens ausgerichtet ist.

Durch diese vorgenannten Ausgestaltungen der Montagevorrichtung kann in Richtung senkrecht zur äusseren Oberfläche des Gebäudeelements, des Installationskanals, des Verteilerkastens und/oder des Medienkastens eine besonders geringe Bauhöhe der Anschlussdose erreicht werden.

Die Montagevorrichtung kann aber auch anders ausgestaltet sein.

Gemäss einer besonders bevorzugten Ausführungsform ist die Montagevorrichtung derart ausgelegt, dass bei einer vorgesehenen Befestigung der Anschlussdose am Gebäudeelement, Installationskanal, Verteilerkasten und/oder Medienkasten das Kabelreservoirin das Gebäudeelement, den Installationskanal, den Verteilerkasten und/oder den Medienkasten hinein ragt. In diesem Fall kann die Anschlussdose als Unterputzdose eingesetzt werden.

In Kombination mit einer schräg angeordneten Halterung kann eine eingesetzte Anschlussvorrichtung zum Anschliessen eines optischen Leiters dennoch über die sichtbare und/oder äussere Oberfläche des Gebäudeelements, Installationskanals, Verteilerkastens und/oder Medienkastens hinausragen, was den Anschluss eines optischen Leiters vereinfacht.

Die Montagevorrichtung ist in einer ganz besonders bevorzugten Ausführungsform derart ausgelegt, dass die Anschlussdose als Unterputzdose an einem Gebäudeelement befestigbar ist.

Weiter ist es bevorzugt, wenn die Anschlussdose ein Gehäuse aufweist, welches in montiertem Zustand die Halterung für eine Anschlussvorrichtung zum Anschliessen eines optischen Leiters wenigstens teilweise umgibt, insbesondere ohne die Spleisskassette und/oder das Kabelreservoir abzudecken. Ist die Anschlussdose als Unterputzdose ausgelegt, können die Komponenten der Anschlussdose in montierten Zustand so vollumfänglich geschützt werden.

Gemäss einer weiteren Ausführungsform umfasst die Anschlussdose ein Gehäuse, welches die Halterung für eine Anschlussvorrichtung zum Anschliessen eines optischen Leiters die Spleisskassette und das Kabelreservoir vollständig umgibt. In diesem Fall kann die Anschlussdose als Aufputzdose ausgelegt sein.

Das Gehäuse beinhaltet des Weiteren bevorzugt ein oder mehrere Durchlässe, durch welche sich ein optischer Leiter von ausserhalb des Gehäuses an eine in der wenigstens einen Halterung vorliegende Anschlussvorrichtung anschliessen lässt.

Ein weiterer Aspekt der vorliegenden Erfindung betrifft ein Gebäudeelement, insbesondere eine Wand, einen Boden oder eine Decke, mit einer daran befestigten Anschlussdose wie sie vorstehend beschrieben ist.

Die Anschlussdose ist dabei bevorzugt teilweise in das Gebäudeelement eingelassen. Insbesondere handelt es sich bei der Anschlussdose in diesem Fall um eine Unterputzdose.

Speziell bevorzugt sind dabei das Kabelreservoir und die Spleisskassette in einer Vertiefung im Gebäudeelement, bevorzugt in einem Unterputzeinlasskasten, eingelassen.

Eine Anschlussvorrichtung zum Anschliessen eines optischen Leiters an die Anschlussdose, welche in der zugehörigen Halterung des Anschlussdose vorliegt, ragt dabei im Besonderen aus dem Gebäudeelement heraus, bevorzugt in einer Richtung schräg zu einer sichtbaren Oberfläche des Gebäudeelements.

Weiter ist es bevorzugt, wenn die Halterung zur Aufnahme einer Anschlussvorrichtung zum Anschliessen eines optischen Leiters an die Anschlussdose von einem Gehäuse abgedeckt ist, während das Kabelreservoir und die Spleisskassette im Innern des Gebäudeelements aufgenommen sind.

Ebenfalls ein Aspekt der vorliegenden Erfindung ist eine Anordnung umfassend einen Installationskanal, einen Verteilerkasten und/oder einen Medienkasten, mit einer daran befestigten Anschlussdose, wie sie vorstehend beschrieben ist.

Der Installationskanal, Verteilerkasten und/oder Medienkasten kann an einem Gebäudeelement, insbesondere an einer Wand, einem Boden oder einer Decke, befestigt und/oder wenigstens teilweise, im Besonderen vollständig, in dieses eingelassen sein.

Die Anschlussdose ist dabei bevorzugt teilweise in den Installationskanal, den Verteilerkasten und/oder den Medienkasten eingelassen. Insbesondere handelt es sich bei der Anschlussdose in diesem Fall um eine Unterputzdose.

Speziell bevorzugt sind dabei das Kabelreservoirund die Spleisskassette im Installationskanal, im Verteilerkasten und/oder im Medienkasten, eingelassen während eine Anschlussvorrichtung zum Anschliessen eines optischen Leiters an die Anschlussdose, welche in der zugehörigen Halterung des Anschlussdose vorliegt, im Besonderen aus dem Installationskanal, dem Verteilerkasten und/oder dem Medienkasten herausragt, bevorzugt in einer Richtung schräg zu einer äusseren und/oder sichtbaren Oberfläche des Installationskanals, Verteilerkastens und/oder Medienkastens.

Weiter ist es bevorzugt, wenn die Halterung zur Aufnahme einer Anschlussvorrichtung zum Anschliessen eines optischen Leiters an die Anschlussdose von einem Gehäuse abgedeckt ist, während das Kabelreservoir und die Spleisskassette im Innern des Installationskanals, Verteilerkastens und/oder im Medienkastens aufgenommen sind.

Es ist aber in einer weiteren Ausführungsform auch möglich, dass die Anschlussdose vollständig im Innern des Installationskanals, Verteilerkastens und/oder im Medienkastens vorliegt. Die Anschlussdose ist dabei bevorzugt so angeordnet, dass die Spleisskassette näher an einer Zugangsöffnung des Installationskanals, Verteilerkastens und/oder Medienkastens liegt, als das Kabelreservoir.

Aus der nachfolgenden Detailbeschreibung und der Gesamtheit der Patentansprüche ergeben sich weitere vorteilhafte Ausführungsformen und Merkmalskombinationen der Erfindung.

### Kurze Beschreibung der Zeichnungen

Die zur Erläuterung des Ausführungsbeispiels verwendeten Zeichnungen zeigen:
- Fig. 1: Eine erfindungsgemässe Anschlussdose in Form einer Unterputzdose mit einem Kabelreservoir, einer Spleisskassette und einem Halter mit einem darin angeordneten Steckverbinder für einen Lichtwellenleiter;
- Fig. 2: Eine Aufsicht auf das offene Ende des Kabelreservoirs der Anschlussdose aus Fig. 1 mit einem darin in einem achtförmigen Verlauf aufgewickelten Lichtwellenleiteranschlusskabel;
- Fig. 3: Den Innenbereich der Spleisskassette der Anschlussdose aus Fig. 1 in einer Aufsicht. In der Faseraufnahme sind optische Fasern aufgewickelt, während in einem zentralen Bereich ein Spleiss in der Spleissaufnahme vorliegt;
- Fig. 4: Die Anschlussdose aus Fig. 1 in einer Aufsicht auf den Halter mit dem darin angeordneten Steckverbinder für einen Lichtwellenleiter;
- Fig. 5: Die Anschlussdose aus Fig. 1 in geöffnetem Zustand, wobei das Kabelreservoir um die durch das Scharnier zwischen Kabelreservoir und Spleisskassette definierte Drehachse nach oben geschwenkt wurde;
- Fig. 6: Eine Anordnung, in welcher die Anschlussdose aus Fig. 1 über einen Montagerahmen in einem Unterputzeinlasskasten in einer Wand eines Gebäudes eingebaut ist in einer teilweisen Schnittdarstellung.

Grundsätzlich sind in den Figuren gleiche Teile mit gleichen Bezugszeichen versehen.

### Wege zur Ausführung der Erfindung

Fig. 1 zeigt eine erfindungsgemässe Anschlussdose 100 von der Seite in einer Aufsicht. Die Anschlussdose 100 ist als Unterputzdose ausgelegt, welche beispielsweise in einer Vertiefung eines Gebäudeelements, z.B. einer Wand, teilweise aufgenommen wird.

In Fig. 1 auf der linken Seite liegt ein Kabelreservoir 200 zum Aufwickeln von unterschiedlichen Überlängen eines Lichtwellenleiteranschlusskabels 600 vor. Das Lichtwellenleiteranschlusskabel 600 enthält z.B. eine einzelne optische Faser. Das Kabelreservoir 200 ist als einseitig verschlossener zylindrischer Hohlkörper ausgestaltet, welcher auf der in Fig. 1 rechten Seite mit einer im Wesentlichen abgerundeten quadratischen Bodenfläche 201 abschliesst und eine umlaufende Mantelfläche 202 als Randbereich aufweist. Auf der in Fig. 1 linken Seite ist das Kabelreservoir offen und frei zugänglich ist. Eine Aufsicht auf das offene Ende des Kabelreservoirs 200 ist in Fig. 2 gezeigt. Fig. 4 zeigt eine Aufsicht auf die Anschlussdose 100 aus der in Fig. 1 rechten Seite.

Im Innern des Kabelreservoirs 200 ragen von der Bodenfläche 201 in einem zentralen Bereich zwei beabstandete Wickelkörper 220a, 220b in einer senkrechten Richtung ab. Die Wickelkörper 220a, 220b sind als Segmente eines hohlzylindrischen Profils bzw. U-förmige Profile ausgestaltet, welche eine konvexe Oberfläche zur Aufwicklung des Lichtwellenleiteranschlusskabels 600 in Form einer "8" bzw. mit achtförmigem Verlauf aufweisen. An den von der Bodenfläche 201 abgewandten und freien Enden der Wickelkörper 220a, 220b sind an jedem Wickelkörper je zwei zungenförmige Sicherungsvorsprünge 221a, 221b angeordnet. Ebenso sind am oberen und freien Ende des Randbereichs 201 weitere zungenförmige Sicherungsvorsprünge 203a, 203b angeordnet, welche in den Innenbereich des Kabelreservoirs 200 hineinragen.

In den Fig. 1 und 2 am oberen Ende des Kabelreservoirs 200 liegt in der Bodenfläche 201 ein schlitzförmiger Durchlass 210 vor, durch welchen sich das Lichtwellenleiterkabel 600 aus dem Kabelreservoir 200 heraus in die an das Kabelreservoir 200 angrenzende Spleisskassette 300 hineinführen lässt.

In Fig. 1 schliesst an der rechten Seite der Bodenfläche 201 des Kabelreservoirs 200 direkt die Spleisskassette 300 an. Die Spleisskassette 300 weist eine im Wesentlichen abgerundete quadratische Grundplatte 301 mit einem abstehenden und die Bodenplatte 301 umlaufenden Randbereich 302 auf. Die Bodenplatte 301 der Spleisskassette 300 steht dabei parallel zur Bodenfläche 201 des Kabelreservoirs 200. In der in Fig. 1 gezeigten Anordnung liegt die Bodenfläche 201 des Kabelreservoirs 200 auf dem in Fig. 1 linken Ende des Randbereichs 302 der Spleisskassette 300 auf und verschliesst diese. Dabei sind das Kabelreservoir 200 und die Spleisskassette in Fig. 1 am oberen Ende mit einem Scharnier 250 verbunden, während am unteren Ende ein an der Spleisskassette 300 angebrachter Rasthaken 350 das Kabelreservoir 200 formschlüssig umgreift.

Fig. 3 zeigt den Innenbereich der Spleisskassette 300 in einer Aufsicht aus der in Fig. 1 linken Seite, wobei das davor liegende Kabelreservoir 200 weggelassen wurde. In den vier Eckbereichen der Grundplatte 301 steht je ein Vorsprung 320a, 320b, 320c, 320d als Führungselement senkrecht von der Grundplatte 301 nach oben ab. Damit wird eine Faseraufnahme in Form eines kanalförmigen Bereichs zur Aufnahme des Endes des endseitig entmantelten Lichtwellenleiteranschlusskabels 600 und zum Aufwickeln von Überlängen von optischen Fasern eines Pigtails 700 gebildet. Am oberen und freien Ende des Randbereichs 301 sind des Weiteren zungenförmige Sicherungsvorsprünge 321a, 321b, 321c, 321d, 321 e, 321f angeordnet, welche in den Innenbereich der Spleisskassette 300 hineinragen und verhindern, dass die in der Faseraufnahme bzw. im kanalförmigen Bereich vorliegenden Fasern 700 nach oben aus der Faseraufnahme herausrutschen.

In einem zentralen Bereich der Bodenplatte 301 ist eine Spleissaufnahme 800 für insgesamt vier Spleisse gezeigt. In Fig. 3 liegt in der ersten Spleissaufnahme ein Spleiss 810 vor, mit welchem die optischen Fasern des Lichtwellenleiteranschlusskabels 600 mit den optischen Fasern eines Pigtails 700 optisch leitend verbunden sind.

In den Fig. 1 und 3 am oberen Ende der Spleisskassette 300 liegt in der Bodenplatte 301 ein schlitzförmiger Faserdurchlassöffnung 310 vor, durch welchen sich die optischen Fasern eines Pigtails 700 aus der Spleisskassette 300 herausgeführt werden.

Wie in Fig. 1 und 4 gut sichtbar, ist auf der dem Innenbereich der Spleisskassette 300 abgewandten Seite der Bodenplatte 301 ein gewinkelter Träger 410 angebracht, an welchem im Bereich seines freien Endes zwei Halterungen 400a, 400b mit je einem darin angebrachten optischen Steckverbinder 500a, 500b angeordnet sind.

Die Halter 400a, 400b sowie die darin vorliegenden Steckverbinder 500a, 500b ragen dabei unter einem Winkel von ca. 20° parallel nebeneinander schräg von der Bodenplatte 301 weg. Am einen Steckverbinder 500b ist der Pigtail 700 angeschlossen, dessen optische Fasern in die Spleisskassette 300 hineingeführt sind.

Die Steckverbinder 500a, 500b stellen Anschlussvorrichtung zum Anschliessen eines optischen Leiters, z.B. eines optischen Kommunikationsgeräts, dar.

Am Träger 410 sind zudem zwei Befestigungsösen 420a, 420b als Montagevorrichtungen angebracht, Die Befestigungsösen 420a, 420b ragen dabei in einer Richtung parallel zur Bodenplatte 301 in entgegengesetzten Richtungen seitlich von der Spleisskassette 300 weg. Über die Bohrungen der Befestigungsösen 420a, 420b kann die Anschlussdose an einem Gebäudeelement oder einem Montagerahmen befestigt werden.

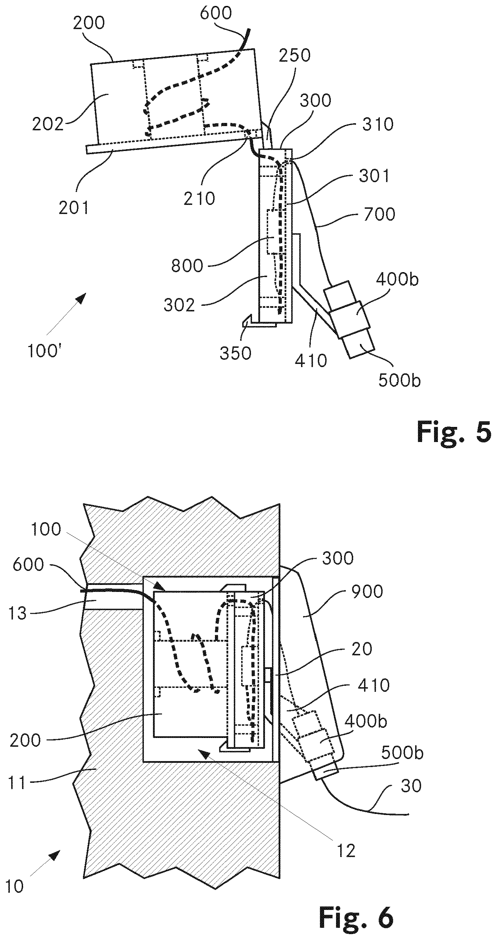

Fig. 5 zeigt eine Anschlussdose 100' in geöffnetem Zustand. Die geöffnete Anschlussdose 100' entspricht der Anschlussdose 100, wobei aber das Kabelreservoir200 nach der Entriegelung des Rasthakens 350 um die durch das Scharnier 250 definierten Drehachse nach oben geschwenkt wurde.

In geöffnetem Zustand ist die Spleisskassette vollständig frei zugänglich, so dass ein Pigtail 700 mit dem durch die schlitzförmige Öffnung 210 zugeführten Lichtwellenleiteranschlusskabel 600 gespleisst und Überlängen des Pigtails problemlos in der Spleisskassette aufgewickelt werden können. Danach kann die Spleisskassette 300 mit dem Kabelreservoir200 wieder verschlossen werden und allfällige Überlängen des Lichtwellenleiteranschlusskabels 600 können im Kabelreservoir 200 aufgewickelt werden.

Fig. 6 zeigt eine Anordnung 10, in welcher die Anschlussdose 100 aus Fig. 1 in eine Wand 11 eines Gebäudes eingebaut ist, in einer teilweisen Schnittdarstellung. Die Anschlussdose 100 ist dabei über einen an den Befestigungsösen 420a, 420b angebrachten Montagerahmen 20 an der Wand 11 befestigt.

Das Kabelreservoir 200 sowie die Spleisskassette 300 liegen dabei in einer Vertiefung 12 in einem Unterputzeinlasskasten in der Wand 11 vor, während der Träger 410 mit den Halterungen 400a, 400b und den darin angebrachten optischen Steckverbindern 500a, 500b aus der Vertiefung 12 herausragt.

Die aus der Vertiefung 12 herausragenden Teile der Anschlussdose 100 sind des Weiteren mit einer Gehäuseabdeckung 900 abgedeckt, wobei einzig die Steckverbinder 500a, 500b mit ihren freien Enden teilweise aus der Gehäuseabdeckung 900 herausragen.

Am einen Steckverbinder 500b ist ein optischer Leiter 30 angeschlossen, über welchen beispielsweise eine Verbindung mit einem optischen Netzwerkgerät hergestellt werden kann.

Die vorstehend beschriebene Ausführungsform ist lediglich als illustratives Beispiel zu verstehen, welches ihm Rahmen der vorliegenden Erfindung beliebig abgewandelt werden kann.

So kann das Lichtwellenleiteranschlusskabel 600 z.B. mehr als eine optische Faser aufweisen. Auch ist es möglich, mehr als ein Lichtwellenleiteranschlusskabel im Kabelreservoir 200 aufzunehmen und in die Spleisskassette 300 weiterzuführen.

Ebenso können mehr oder weniger als die zwei Halterungen 400a, 400b für Steckverbinder 500a, 500b und/oder andere Anschlussvorrichtungen vorgesehen werden.

Die Halterungen 400a, 400b können in einer anderen Ausführungsform auch einen anderen Winkel in Bezug auf die Bodenplatte 301 der Spleisskassette 300 aufweisen.

Auch möglich ist es, die Anschlussdose 100 als Aufputzdose zu verwenden, z.B. indem diese in ein entsprechendes Gehäuse aufgenommen werden.

Denkbar ist auch, dass anstelle des Scharniers 250 eine zweite Rastverbindung vorgesehen wird. Damit kann das Kabelreservoir 200 vollständig von der Spleisskassette getrennt werden. Die zweite Rastverbindung kann dabei analog zum Rasthaken 350 ausgestaltet sein. Zusätzliche Positionierungselemente können in diesem Fall helfen, das Kabelreservoir 200 und die Spleisskassette 300 relativ zueinander zu positionieren.

Die Form der Bodenfläche 201 des Kabelreservoirs und/oder der Bodenplatte 301 der Spleisskassette 300 können auch anders ausgebildet sein, z.B. kreisrund, elliptisch, trapezförmig oder als Vieleck. Damit kann beispielsweise die äussere Form der Anschlussdose an spezielle Gegebenheiten angepasst werden.

Des Weiteren können in der Bodenfläche 201, der Mantelfläche 202, der Bodenplatte 301 und/oder dem umlaufenden Randbereich 302 zusätzliche Öffnungen vorgesehen werden, welche z.B. eine optische Kontrolle bei geschlossener Spleisskassette ermöglichen. Eine zusätzliche Öffnung in der Mantelfläche 202 des Kabelreservoirs 200 kann genutzt werden, um das eine oder ein weiteres Lichtwellenleiteranschlusskabel aus einer anderen Richtung in das Kabelreservoir einzuführen.

Auch möglich ist es, die Wickelkörper 220a, 220b im Kabelreservoir 200 anders auszugestalten und/oder zusätzliche Wickelkörper und/oder Kabelführungen vorzusehen.

Zusätzlich oder anstelle des Rasthakens 350 kann eine Schraube und/oder ein Splint vorgesehen werden, welche das Kabelreservoir 200 in der geschlossenen Position über der Spleisskassette 300 hält. Auch denkbar ist es, das Kabelreservoir 200 nach erfolgter Montage des Pigtails 700 und der Verbindung mit dem Lichtwellenleiteranschlusskabel 600 stoffschlüssig zu verbinden, beispielsweise durch Verkleben des Randbereichs 302 mit der Bodenfläche 201.

Schliesslich kann die Anschlussdose 100 zusätzliche Anschlüsse für kupferbasierte Leitungen zur elektrischen Signalübertragung und/oder zur elektrischen Energieübertragung beinhalten.

Zusammenfassend ist festzustellen, dass eine neuartige Anschlussdose bereitgestellt wurde, welche sich im Besonderen durch ihre Kompaktheit, einfache und sichere Montagemöglichkeit sowie Flexibilität auszeichnet. Im Besonderen erlaubt es die Anschlussdose, unterschiedliche Überlängen von optischen Fasern und Lichtwellenleiteranschlusskabeln aufzunehmen.

## Patentansprüche

1. Anschlussdose (100) für Lichtwellenleiter, insbesondere in Form einer Unterputzdose, enthaltend:
a) ein Kabelreservoir (200) zum Ablegen von unterschiedlichen Überlängen eines Lichtwellenleiteranschlusskabels (600),
b) eine Spleisskassette (300) umfassend eine Spleissaufnahme (800) für einen oder mehrere Spleisse (810) sowie umfassend eine Faseraufnahme (320a, 320b, 320c, 320d) zur Aufnahme von unterschiedlichen Überlängen an einzelnen optischen Fasern und/oder zur Aufnahme von nicht benutzten optischen Fasern ,
c) Eine Halterung (400a, 400b) für die Aufnahme einer Anschlussvorrichtung (500a, 500b) zum Anschliessen eines optischen Leiters (30) an die Anschlussdose (100),
wobei Kabelreservoir (200) und Spleisskassette (300) in räumlich voneinander getrennten Bereichen vorliegen und wobei das Kabelreservoir (200) gegenüber der Spleisskassette (300) beweglich gelagert ist, so dass die Spleisskassette (300) mit dem Kabelreservoir (200) verschliessbar ist.

2. Anschlussdose (100) nach Anspruch 1, **dadurch gekennzeichnet, dass** bei geschlossener Spleisskassette (300) das Kabelreservoir (200) von einer der Spleisskassette (300) abgewandten Seite zugänglich ist, so dass bei geschlossener Spleisskassette (300) Überlängen des Lichtwellenleiteranschlusskabels (600) von der der Spleisskassette (300) abgewandten Seite her im Kabelreservoir (200) aufgenommen werden können.

3. Anschlussdose (100) nach wenigstens einem der Ansprüche 1 - 2, **dadurch gekennzeichnet, dass** die Spleisskassette (300) form- und/oder kraftschlüssig mit dem Kabelreservoir (200) verschliessbar ist, insbesondere mit einer form- und/oder kraftschlüssigen Verbindungsvorrichtung (350), bevorzugt einer Rastverbindung.

4. Anschlussdose (100) nach wenigstens einem der Ansprüche 1 - 3, **dadurch gekennzeichnet, dass** das Kabelreservoir (200) derart ausgestaltet ist, dass das Lichtwellenleiteranschlusskabel (600) mit einem achtförmigen Verlauf abgelegt werden kann, wobei insbesondere das Lichtwellenleiterkabel (600) in Form von mehreren im Wesentlichen parallel übereinander liegenden achtförmigen Schleifen abgelegt werden kann.

5. Anschlussdose (100) nach wenigstens einem der Ansprüche 1 - 4, **dadurch gekennzeichnet, dass** im Kabelreservoir (200) zwei beabstandete Wickelkörper (220a, 220b) vorliegen, welche eine Aufwicklung des Lichtwellenleiteranschlusskabels (600) mit einem achtförmigen Verlauf ermöglichen, insbesondere so dass zwischen den beiden Wickelkörpern (220a, 220b) ein Freiraum vorliegt, in welchem sich das Lichtwellenleiteranschlusskabel (600) von einem Wickelkörper (220a) zum anderen (220b) führen lässt und in welchem sich Abschnitte des Lichtwellenleiteranschlusskabels (600) kreuzen können, wenn das Lichtwellenleiteranschlusskabel (600) mit einem achtförmigen Verlauf auf die Wickelkörper (220a, 220b) aufgewickelt ist.

6. Anschlussdose (100) nach wenigstens einem der Ansprüche 1 - 5, **dadurch gekennzeichnet, dass** das Kabelreservoir (200) gegenüber der Spleisskassette (300) dreh- und/oder verkippbar gelagert ist, bevorzugt über ein Scharnier (250).

7. Anschlussdose (100) nach wenigstens einem der Ansprüche 1 - 5, **dadurch gekennzeichnet, dass** im Bereich einer Drehachse des Kabelreservoirs (200) und/oder seitlich im Kabelreservoir (200) ein schlitzförmiger Durchlass (210) vorliegt, insbesondere in der Bodenfläche (201), durch welchen sich ein Lichtwellenleiteranschlusskabel (600) aus dem Kabelreservoir (200) in die Spleisskassette (300) führen lässt, wenn die Spleisskassette (300) mit dem Kabelreservoir (200) verschlossen ist.

8. Anschlussdose (100) nach Anspruch 7, **dadurch gekennzeichnet, dass** der schlitzförmige Durchlass (210) über der Faseraufnahme für die optischen Fasern in der Spleisskassette (300) liegt.

9. Anschlussdose (100) nach wenigstens einem der Ansprüche 1 - 8, **dadurch gekennzeichnet, dass** die Spleissablage (800) in der Spleisskassette (300) in einem zentralen Bereich der Faseraufnahme angeordnet ist, insbesondere so, dass die optischen Fasern (700) die Spleissaufnahme (800) in einer Ebene umgeben, wenn die optischen Fasern (700) in der Faseraufnahme vorliegen.

10. Anschlussdose (100) nach wenigstens einem der Ansprüche 1 - 9, **dadurch gekennzeichnet, dass** in einer Grundplatte (301) der Spleisskassette (300), insbesondere in einem Bereich eines abstehenden Randbereichs (302), eine Faserdurchlassöffnung (310) vorliegt, durch welche sich optische Fasern (700) aus der Spleisskassette (300) herausführen lassen, wenn die Spleisskassette (300) mit dem Kabelreservoir (200) verschlossen ist, insbesondere auf eine dem Kabelreservoir (200) entgegen gesetzte Seite der Spleisskassette (300).

11. Anschlussdose (100) nach wenigstens einem der Ansprüche 1 - 10, **dadurch gekennzeichnet, dass** das Kabelreservoir (200) und die Spleisskassette (300) derart ausgestaltet sind, dass in montiertem Zustand eine Wickelebene des Lichtwellenleiteranschlusskabels (600) im Kabelreservoir (200) im Wesentlichen planparallel zu einer Wickelebene der optischen Fasern (700) in der Faseraufnahme (320a, 320b, 320c, 320d) der Spleisskassette (300) liegt.

12. Anschlussdose (100) nach wenigstens einem der Ansprüche 1 - 11, **dadurch gekennzeichnet, dass** die wenigstens eine Halterung (400a, 400b) derart ausgestaltet ist, dass eine in der Halterung (400a, 400b) eingesetzte Anschlussvorrichtung (500a, 500b), insbesondere ein Steckverbinder, in einer Richtung schräg zu einer Wickelebene der optischen Fasern (700) in der Faseraufnahme (320a, 320b, 320c, 320d) und/oder zu einer Wickelebene des Lichtwellenleiteranschlusskabels (600) im Kabelreservoir (200) steht.

13. Anschlussdose (100) nach wenigstens einem der Ansprüche 1 - 12, **dadurch gekennzeichnet, dass** die Spleisskassette (300) räumlich zwischen dem Kabelreservoir (200) und der Halterung (400a, 400b) zur Aufnahme einer Anschlussvorrichtung (500a, 500b) zum Anschliessen eines optischen Leiters (30) an die Anschlussdose (100) vorliegt.

14. Gebäudeelement (11), insbesondere eine Wand, ein Boden oder eine Decke, mit einer daran befestigten Anschlussdose (100), wie sie in einem der vorstehenden Ansprüche beschrieben ist.

15. Gebäudeelement nach Anspruch 14 wobei das Kabelreservoir und die Spleisskassette in einer Vertiefung im Gebäudeelement, bevorzugt in einem Unterputzeinlasskasten, eingelassen sind und wobei eine Anschlussvorrichtung zum Anschliessen eines optischen Leiters an die Anschlussdose, welche in der zugehörigen Halterung des Anschlussdose vorliegt, aus dem Gebäudeelement herausragt, bevorzugt in einer Richtung schräg zu einer sichtbaren Oberfläche des Gebäudeelements.

16. Anordnung umfassend einen Installationskanal, einen Verteilerkasten und/oder einen Medienkasten sowie eine daran befestigte Anschlussdose (100), wie sie in einem der vorstehenden Ansprüche beschrieben ist.
